# DEMANDE DE BREVET EUROPEEN

(11) **EP 1 375 914 A1**
(43) Date de publication de la demande: **02.01.2004**
(21) Numéro de dépôt: 03291472.3
(22) Date de dépôt: 17.06.2003
(51) Int. Cl.: F03D 11/04, F03D 7/02

(54) **Ensemble éolienne flottant**

(30) Priorité: 18.06.2002 FR 0207500
(71) Demandeur: Lucas, Jean, 75005 Paris (FR); Lucas, Paul, 75005 Paris (FR)
(72) Inventeur: Lucas, Jean, 75005 Paris (FR); Lucas, Paul, 75005 Paris (FR)

(57) **Abrégé**

L'invention concerne un dispositif permettant de réaliser avantageusement de grandes éoliennes flottantes ou à terre. Elle comporte un panneau éolien constitué de barres disposées avantageusement en tétraèdre aux noeuds desquels sont attachés les axes des roues éoliennes. Elle comprend aussi deux poutres supportant ledit panneau et qui sont reliées en leur avant. Elle comprend encore trois flotteurs qui peuvent être des trimarans ou des catamarans et qui supportent l'extrémité avant et les deux extrémités arrière des poutres. Elle comprend enfin dans la version marine un dispositif enrouleur de câble d'ancrage et de transport de l'électricité.

Le dispositif, dans une version terrestre, est supporté par des équipages roulants et constitue un système de production d'énergie éolienne réalisable plus facilement que les grandes éoliennes.

Pour être adaptée à certains types de roues, la structure treillis du panneau peut être complétée par des barres additionnelles.

## Description

La présente invention concerne un dispositif orientable constitué d'un panneau de barres permettant de porter les supports, fixes par rapport au panneau, des axes de nombreuses roues d'éoliennes. Elle concerne aussi les parties composant ce dispositif. L'invention relève des équipements permettant la production d'énergie et en particulier des équipements permettant de récupérer l'énergie du vent en produisant ainsi de l'énergie hydraulique ou essentiellement de l'électricité. Elle s'applique essentiellement à la réalisation d'unités éoliennes flottantes et en particulier en mer, de puissance de quelques centaines de kilowatts ou quelques mégawatts; mais elle peut également s'appliquer à la réalisation d'unités éoliennes à terre.

La volonté de produire au moindre coût de l'électricité à partir du vent a conduit à construire des éoliennes toujours plus grandes. Elles sont installées sur des poteaux. L'optimisation de telles éoliennes conduit aujourd'hui à des pales qui peuvent atteindre cinquante mètres de long. Le calcul de telles pales est délicat et les vibrations qui y apparaissent obligent à la mise en oeuvre de techniques coûteuses. De même, la fabrication, le transport et le montage de ces grandes éoliennes coûte fort cher d'autant plus que, toujours pour supprimer les vibrations, les mâts et les aubes doivent être particulièrement rigides. De plus, la réaction de rejet des populations avoisinantes face au bruit généré par les éoliennes et à la modification du paysage qu'elles engendrent pousse à délocaliser les éoliennes en mer. Mais la nécessité d'éviter des mouvements mal contrôlés au niveau de l'axe de l'éolienne conduisent à ne pas construire d'éoliennes flottantes mais plutôt, si l'on veut faire de l'éolien en mer, à les fonder sur des massifs immergés. La réalisation d'ensembles éoliens flottants a fait l'objet de diverses propositions plus ou moins anciennes : il y a plus de vingt ans, on avait proposé un panneau d'éoliennes portées par un flotteur quillé qui rentrait profondément dans la mer. Ce procédé qui était assez séduisant conduit à des volumes de flotteurs et à des masses de quilles très importants. De plus, le panneau d'éoliennes qu'il supporte ne peut être maintenu perpendiculaire au vent. Plus récemment, un brevet publié: WO 01/98654 propose un mode de réalisation d'un ensemble flottant de grandes éoliennes dans lesquelles des mâts analogues aux mâts des éoliennes à terre sont reliés par d'énormes tubes organisés en filets. Ce procédé n'est adapté qu'à des plans d'eau sur lesquels les vagues restent petites mais conduirait à des dimensions très coûteuses dans des sites où il peut y avoir des houles profondes, c'est-à-dire dans la plupart des sites marins. Or, le principe de remplacer de grandes éoliennes par des panneaux d'éoliennes beaucoup plus petites est particulièrement intéressant si l'on n'a pas à régler le problème de l'orientation de chaque éolienne et si l'on a trouvé une solution avantageuse au problème de l'orientation générale du panneau. Il conduit en effet à une diminution des coûts de fabrication aussi bien des roues que des dispositifs de conversion de l'énergie qui peuvent être fabriqués en série. Ce principe a d'ailleurs fait l'objet de diverses publications et a été décrit dans bon nombre de brevets dont certains très anciens.

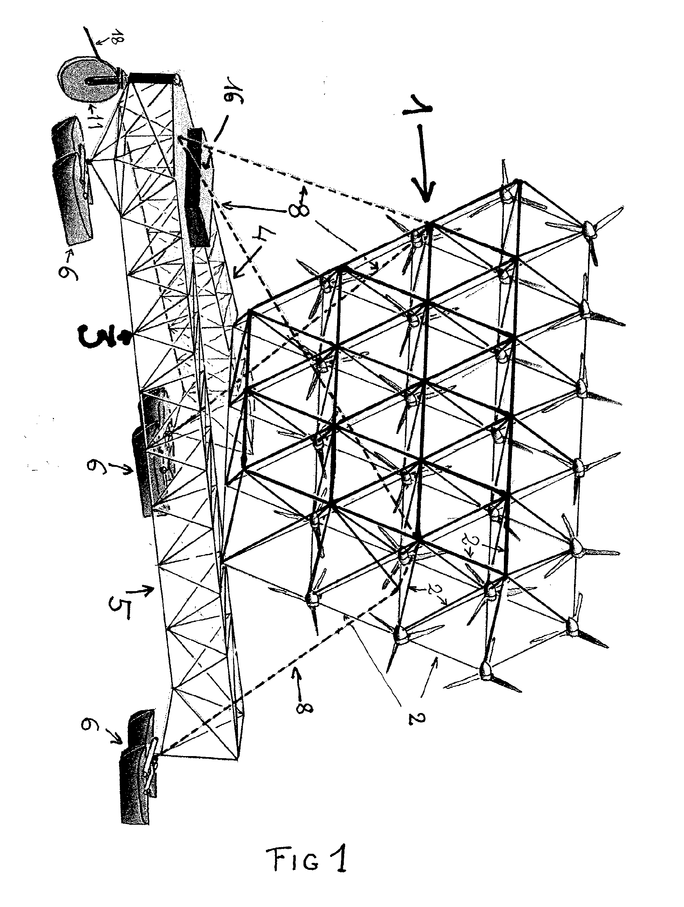

La présente invention consiste en un mode particulièrement avantageux de mise en oeuvre et de réalisation d'un panneau d'éoliennes flottant. La présence de petites éoliennes sur ce panneau fait qu'il est acceptable que ce panneau ait des mouvements qui permettent de suivre les ondulations de la houle. Le dispositif de la présente invention (figure 1) comporte un « panneau éolien » (1) réalisé en utilisant un assemblage de barres (2), ces barres pouvant avantageusement être soit des tubes éventuellement haubanés pour augmenter leur résistance au flambement, soit des poutres treillis. Ce panneau éolien est supporté par une structure porteuse (3) avantageusement constituée de deux poutres (4) et (5) qui se rejoignent à l'avant et sur lesquelles le panneau est fixé. Il peut être fixé aussi bien à l'arrière des poutre qu'aux deux tiers de leur longueur à partir de l'avant ou plus généralement en tout point tel que l'orientation du dispositif se fasse le plus naturellement possible. La structure porteuse repose sur trois flotteurs (6) dans le cas d'une installation flottante et, dans le cas d'une installation à terre, sur trois équipages roulants reposant sur une piste ou un rail circulaire. Dans les deux cas (en mer et à terre), la présente invention permet aux panneaux de s'orienter naturellement ou d'être orientés perpendiculairement au vent. Dans la version marine de la présente invention, le panneau éolien se dispose perpendiculairement au vent par le simple fait que l'avant de la structure porteuse comporte un dispositif qui le lie au fond par l'intermédiaire d'un câble (composé éventuellement de plusieurs éléments) qui empêche le dispositif de partir à la dérive et sert à transporter l'électricité produite jusqu'au point d'ancrage fixe d'où elle peut être emmenée à terre. Dans la version terrestre de l'invention, la mise en position est commandée par au moins un moteur actionnant au moins une roue et un automatisme utilisant les informations d'un capteur de direction du vent à partir desquels on oriente le panneau. On remarquera d'ailleurs que cette solution a l'avantage de permettre la « mise en drapeau » de l'ensemble du panneau en cas de prévisions de vents particulièrement forts.

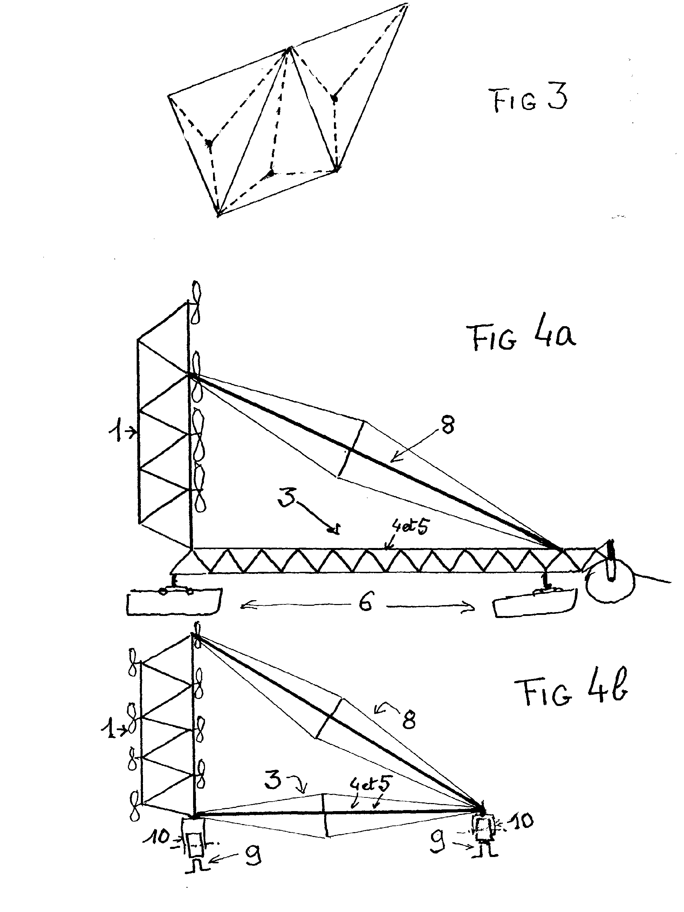

Le « panneau éolien » (1) qui est avantageusement et globalement plat est constitué d'une structure treillis avantageusement tétraédrique aux noeuds de laquelle sont fixés les axes horizontaux des rotors d'éoliennes, axes qui sont approximativement perpendiculaires au plan du panneau éolien. Diverses dispositions sont possibles : soit tous les rotors sont installées sur les noeuds aval (figure 1), soit ils sont tous installés sur les noeuds amont (figure 4a), ce qui a l'avantage d'éviter aux aubes des rotors de subir l'effet des sillages des barres de la structure, soit on peut utiliser à la fois les ou des noeuds amont et les ou des noeuds aval pour supporter les axes de rotors (figure 4b). La meilleure solution dépend du type de rotor choisi. La présente invention couvre également une structure de panneau éolien dans laquelle les axes de rotors seraient fixés non pas sur les noeuds de la structure tétraédrique mais aux points de concours de barres additionnelles (7) formant des pyramides dont les trois arrêtes partent des noeuds de la structure du panneau éolien. La figure 3 est une vue en perspective de quelques barres d'un plan de barres avant ou arrière du « panneau éolien » et des barres additionnelles concourantes formant arrêtes de pyramide qui sont attachées aux noeuds des plans avant ou arrière du « panneau éolien ». Cette disposition est utile pour certains types de roues.

La « structure porteuse » (3) est avantageusement constituée de deux poutres treillis (4 et 5) se rejoignant. Mais elle peut comporter une troisième poutre joignant les arrières ou des points situés plutôt à l'arrière des poutres principales. Les poutres (4 et 5) peuvent également être constituées par des tubes de gros diamètre raidis par des systèmes de type hauban (figure 4b).

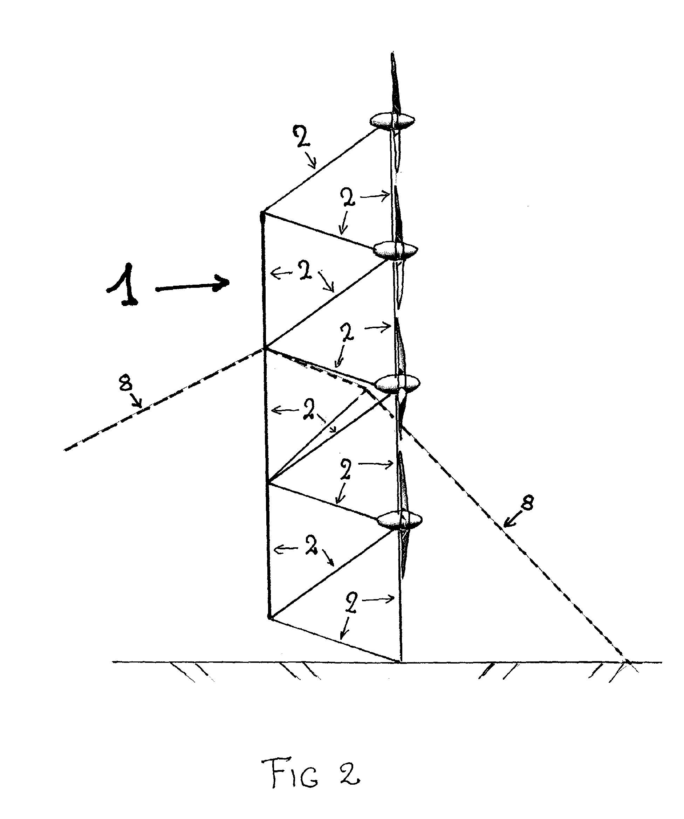

Le « panneau éolien » est avantageusement empêché de tomber en avant ou en arrière par des dispositifs (8) attachés à l'avant et éventuellement à l'arrière des poutres ou en un point judicieux de celles-ci. Ces dispositifs peuvent être des câbles tendus (8 figure 2), des poutres treillis ou des tubes protégés du flambement par un système de haubanage (8 figure 4a et 4b).

Dans une version terrestre de l'invention (figure 4b), la « structure porteuse » repose sur une piste circulaire (9) sur laquelle elle roule par l'intermédiaire de roues ou d'équipages à roues (10). L'énergie produite par les éoliennes est emmenée par un câble ou une conduite soit munie d'un joint tournant soit simplement souple, situé approximativement au centre de la piste et assurant le raccord entre le système d'ensemble mobile et le réseau fixe de transport de l'électricité. Dans la version marine, le problème est plus délicat vu que les mouvements de l'ensemble ne sont pas commandés mais subis et que, du fait de la succession d'accalmies et de vents de force et de direction variables, le câble d'ancrage (17) risque de s'accrocher au fond et de faire des noeuds. L'invention prévoit donc d'attacher le dispositif à un point d'ancrage placé un peu au dessus du fond et fixé sur un bloc d'ancrage, au fond. Cette attache se fait par le biais d'un câble ou de tout autre dispositif équivalent. Ce câble est maintenu tendu par un enrouleur (11) libre en direction du fait d'un axe (12) et qui maintient sur le câble (18) une force déterminée grâce à un système actif avantageusement constitué d'un motoréducteur, ou mieux, d'un système hydraulique à vérins alternatifs (13) ou de tout autre dispositif connu. De cette façon, le câble d'ancrage est toujours tendu et ne touche jamais le fond. L'invention, sans exclure d'autres solutions, prévoit un tambour enrouleur (14) dont la largeur n'est que peu supérieure au diamètre du câble, cela pour éviter les efforts locaux ponctuels sur le câble dus aux recouvrements de nappes successives enroulées sur un tambour large. Dans cette version marine, plusieurs raccords électriques tournants permettent de transmettre l'électricité jusqu'au bloc d'ancrage. L'invention prévoit en particulier, pour éviter toute torsion du câble d'ancrage et de transport de l'électricité, un accrochage particulier au point d'ancrage. Cet accrochage particulier est constitué d'une articulation munie de raccords tournants à butées à billes, rouleaux ou aiguilles installés dans une enceinte étanche munie des joints nécessaires.

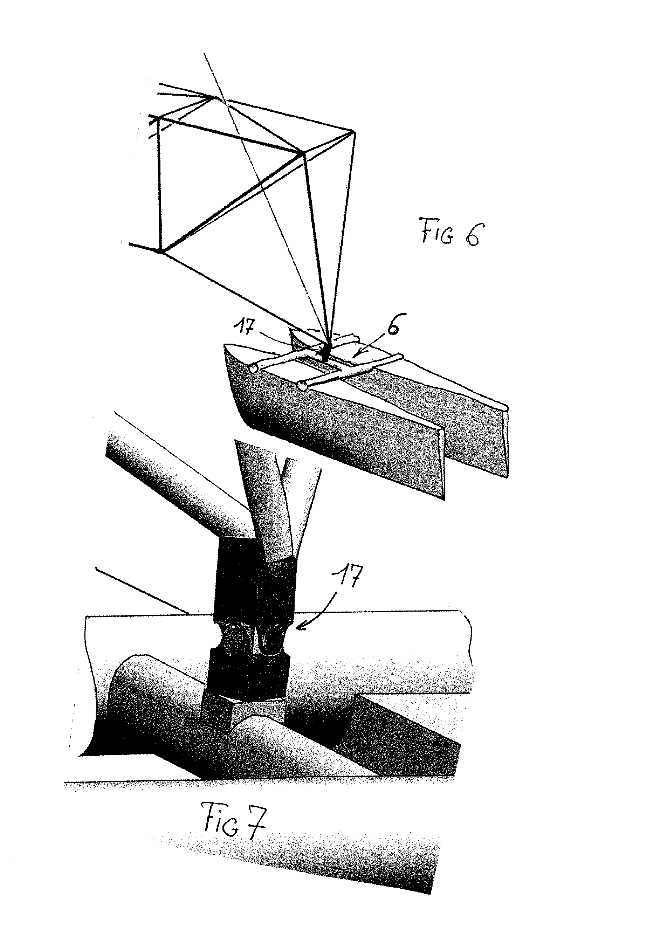

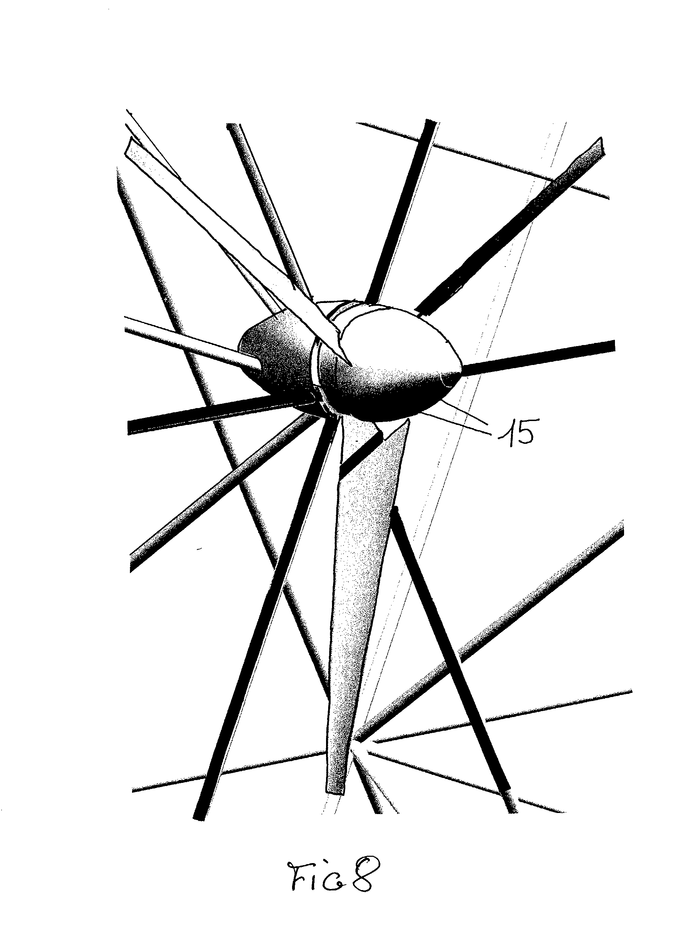

Les flotteurs (6) sont avantageusement constitués de trimarans ou catamarans (figures 1 et 6). Cette disposition, bien que n'étant pas indispensable permet de situer les articulations d'appui (17) de la « structure porteuse » sur les flotteurs au dessus de la surface de l'eau ce qui facilite leur entretien. De même, flotteurs ou coques des flotteurs ont avantageusement une forme longue et effilée à l'arrière de sorte qu'ils s'orientent plus facilement dans le sens du courant. Ils peuvent même être munis d'un empennage arrière immergé. L'orientation des flotteurs dans le sens du courant favorise la bonne disposition du panneau éolien dans le cas où vent et courant n'ont pas la même direction. L'articulation qui attache les flotteurs aux poutres est de type rotule et peut par exemple être réalisée (figure7) avec une noix de cardan dont une des fourches peut tourner autour d'un axe perpendiculaire au pont du flotteur.

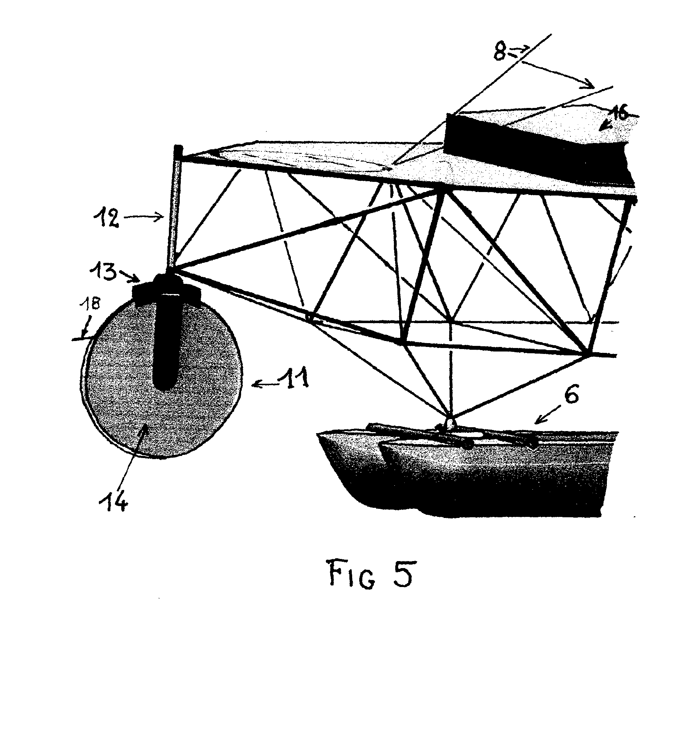

La figure 1 est une vue d'ensemble du dispositif. La figure 2 détaille la structure du panneau éolien dans un cas simple. La figure 3 indique comment peuvent être disposées les barres concourantes additionnelles formant arrêtes de pyramide qui peuvent être fixées sur les noeuds des faces avant et/ou arrière du « panneau éolien ». Les figures 4a et 4b représentent plusieurs solutions, parmi les solutions possibles. La figure 5 représente le dispositif enrouleur de câble. La figure 6 représente un catamaran qui peut être utilisé comme flotteur et les barres qui permettent de tenir la rotule d'appui sur le flotteur. La figure 7 représente une rotule du raccordement poutre-flotteur. La figure 8 montre les capots (15) qui couvrent la fixation des supports de rotors.

L'invention peut être réalisée de la façon suivante:

Le panneau d'éoliennes est construit avec des tubes d'acier de 400 millimètres de diamètre et de 5 à 8 millimètres d'épaisseur dont certains (les plus sollicités en compression) sont raidis par un haubanage. Le panneau a une forme de simple trapèze (comme indiqué sur la figure 1). La forme en simple trapèze, tout en limitant les dimensions de la « structure porteuse » en évitant d'éloigner trop ces poutres, permet d'avoir une plus grande largeur en haut à l'endroit où le vent est le plus important. Les axes de rotors sont portés par deux paliers, l'un placé dans le V formé par les barres supérieures, l'autre attaché à une tôle perpendiculaire à l'axe des roues fixée elle-même sur les barres. Des capots (15) en forme d'ogives ou de cônes sont placés autour de l'axe, fixés aux barres. Les rotors sont des rotors classiques d'éolienne. Ils entraînent chacun une pompe hydraulique à cylindrée variable, de cylindrée régulée, qui reçoit l'huile d'un ou de réseaux basse pression et la renvoie dans un ou des réseaux haute pression. Le ou les réseaux haute pression alimentent un ou des moteurs hydrauliques faisant tourner un ou des alternateurs dits « centraux ». Une autre façon de réaliser l'invention est de faire entraîner directement ou par l'intermédiaire de réducteurs et ou de variateurs un ou des alternateurs produisant des courants électriques que l'on regroupe. Les poutres sont réalisées en treillis de section triangulaire analogue au treillis des flèches de grues de chantier, la face horizontale étant avantageusement placée au dessus. Des liaisons rotules attachées aux noeuds (figure 6), constituées de cardans (figure 7), raccordent les flotteurs aux poutres. A l'avant des poutres, de la façon indiquée par la figure 5, un système de barres tient une sorte de fourche qui tient la bobine où s'enroule le câble. La bobine accumule le câble lorsque la force sur le câble diminue. Elle est actionnée par des vérins fonctionnant en séquence, agissants sur des ergots placés à la périphérie de la bobine enrouleuse.

Les moteurs hydrauliques et les alternateurs qu'ils entraînent sont situés dans une salle des machines (16) installée à l'avant des poutres. On peut en effet remarquer que lorsque le vent souffle, il tend à soulever le flotteur avant et de ce fait, il n'y a que des avantages à charger l'avant des poutres.

L'application industrielle de l'invention est immédiate dans la mesure où, comme on l'a dit plus haut, on cherche actuellement des solutions pour installer des éoliennes en mer et où il semble, d'après des estimations prévisionnelles, qu'un dispositif de quatre mégawatts construit selon l'invention serait nettement moins coûteux qu'une éolienne offshore actuelle. D'un autre côté, dans de nombreux pays du tiers-monde, une installation du type terrestre objet de l'invention a un intérêt particulier du fait de sa fiabilité et de la possibilité de la « mettre en drapeau » facilement ainsi que de la facilité qu'il y a à la construire localement.

## Revendications

1. Dispositif orientable constitué d'un panneau (1) de barres (2) appelé "panneau éolien" permettant de porter les paliers, fixes par rapport au panneau, d'axes de nombreux rotors d'éoliennes, d'un élément appelé « structure porteuse » (3), d'éléments appelés « flotteurs » (6) qui peuvent dans la version terrestre être remplacés par des équipages à roues (10), éventuellement d'un élément enrouleur de câble (13) et d'un mode d'attache des éléments entre eux, **caractérisé en ce que** le panneau éolien est un panneau en structure treillis tridimensionnelle constitué de barres formant arêtes de tétraèdres dont les sommets sont dans deux plans que l'on peut appeler avant et arrière et dont certains noeuds portent les paliers d'axes des rotors d'éoliennes soit directement soit par l'intermédiaire de barres additionnelles concourantes (7)

2. Dispositif selon la revendication 1 **caractérisé en ce que** les barres constituant la structure treillis sont soit des poutres treillis, soit des tubes éventuellement raidis par un système de type haubans

3. Dispositif selon la revendication 1 **caractérisé en ce que** le panneau a une forme en simple trapèze moins large en bas qu'en haut de sorte que les points d'attache à la structure porteuse soient assez mais pas trop éloignés l'un de l'autre

4. Dispositif selon la revendication 1 **caractérisé en ce que** la structure porteuse est constituée de deux poutres se rejoignant à l'avant et s'écartant vers l'arrière

5. Dispositif selon la revendication 1 **caractérisé en ce que** les poutres de la structure porteuse sont soit des poutres treillis, avantageusement de section triangulaire, soit des tubes éventuellement raidis par un système de genre haubanage

6. Dispositif selon la revendication 1 **caractérisé en ce que** les dispositifs empêchant de basculer le panneau éolien sont des poutres treillis ou des tubes éventuellement raidis par des systèmes de type haubans.

7. Dispositif selon la revendication 1 **caractérisé en ce que** la structure porteuse repose sur trois bogies ou trois flotteurs par des points d'appui avec liaison rotule.

8. Dispositif selon la revendication 1 **caractérisé en ce que** les flotteurs ou les coques qui les composent ont une forme effilée en arrière et/ou éventuellement un empennage immergé de sorte qu'ils s'orientent naturellement dans le sens du courant

9. Dispositif selon la revendication 1 **caractérisé en ce que** les trois flotteurs sont des trimarans ou des catamarans

10. Dispositif selon la revendication 1 **caractérisé en ce que** la rotation de chaque rotor fournit de l'huile sous pression par le biais d'une pompe hydraulique à cylindrée variable régulée, huile qui est poussée dans un circuit général haute pression qui débite dans un ou quelques moteurs hydrauliques à cylindrée variable entraînant un ou quelques alternateurs centraux

11. Dispositif selon la revendication 1 **caractérisé en ce que** l'ensemble s'il est flottant est empêché de partir à la dérive par un dispositif du type câble ou équivalent reliant le système à un point fixe proche du fond servant d'ancrage

12. Dispositif selon la revendication 1 **caractérisé en ce que** le câble est enroulé sur une bobine qui exerce sur lui une force de rappel déterminée

13. Dispositif selon la revendication 1 **caractérisé en ce que** le câble est articulé au point fixe proche du fond servant d'ancrage, de sorte qu'il puisse tourner dans toutes les directions y compris sur lui-même
